# DEMANDE DE BREVET EUROPEEN

(11) **EP 1 698 761 A2**
(43) Date de publication de la demande: **06.09.2006**
(21) Numéro de dépôt: 06075402.5
(22) Date de dépôt: 21.02.2006
(51) Int. Cl.: F01D 25/14, F01D 25/24

(54) **Carter interne de turbomachine équipé d'un bouclier thermique**

(30) Priorité: 25.02.2005 FR 0501921
(71) Demandeur: SNECMA, 75015 Paris (FR)
(72) Inventeur: Adam, Gérard, 77130 Cannes Ecluse (FR); Agneray, Xavier, 77300 Fontainebleau (FR); Dos Santos, Kévin, 92160 Antony (FR); Le Hong, Son, 77810 Thomery (FR)
(74) Mandataire: Nguyen, Dominique

(57) **Abrégé**

La présente invention concerne l'amélioration des jeux (12) entre un carter et les aubes mobiles (11) de rotor (10) d'une turbomachine, en particulier un carter prévu à cet effet ainsi qu'une turbomachine équipée d'un tel carter. L'invention s'applique notamment aux turboréacteurs d'aéronefs.

Elle porte plus particulièrement sur un carter interne (21) de turbomachine, comportant une pluralité de viroles annulaires (23) munies de brides (24) reliant deux viroles (23) adjacentes entre elles. Selon l'invention, ce carter interne (21) comporte en outre :
- au moins un bouclier thermique (5) circonférentiel recouvrant les brides (24) en contact de deux viroles (23) adjacentes, et
- une cavité (6) remplie d'un premier isolant thermique (8) située entre une surface interne concave (51a, 52a) du bouclier thermique (5) et les brides (24).

Le bouclier thermique (5) est constitué par une pluralité de secteurs (50) reliés bout à bout.

## Description

La présente invention concerne l'amélioration des jeux entre un carter et les aubes mobiles de rotor d'une turbomachine, en particulier un carter prévu à cet effet ainsi qu'une turbomachine équipée d'un tel carter. L'invention s'applique notamment aux turboréacteurs d'aéronefs.

Les turbomachines comportent classiquement au moins un ensemble rotatif ou rotor comprenant généralement une pluralité de disques. Chaque disque rotor, muni d'une pluralité d'aubes, est rotatif par rapport à une virole fixe qui entoure circonférentiellement chacun des disques. L'ensemble des viroles en vis-à-vis des aubes constitue le carter interne de la turbomachine.

Entre le sommet d'une aube d'un disque rotor et la virole du carter interne en vis-à-vis un jeu existe. Idéalement, de tels jeux devraient être réduits autant que possible pour améliorer les performances de la turbomachine et son opérabilité, c'est-à-dire le fonctionnement sans anomalie de la turbomachine dans l'ensemble de l'enveloppe de vol de l'aéronef. En effet, l'augmentation de ces jeux a pour résultat une diminution significative des rendements de la turbomachine et par conséquent un excès de consommation de combustible. Des jeux importants peuvent également engendrer des pompages pendant les phases transitoires, en accélération ou en décélération, nuisant ainsi à la robustesse de la turbomachine. Différentes raisons peuvent expliquer ces variations de jeux, en particulier les conditions de fonctionnement mécanique et thermique de la turbomachine.

Par exemple, les variations de température engendrent des vitesses de dilatation ou de contraction thermique différentielles entre le rotor et le carter. Par ailleurs, les forces centrifuges agissant sur le rotor et les forces agissant sur le carter, notamment les pressions d'air, créent des déformations mécaniques. Lors du fonctionnement de la turbomachine, le rotor et le carter se déplacent axialement et radialement.

Les déplacements du rotor et du carter ayant des amplitudes et des évolutions transitoires différentes, il en résulte que les pièces fixes et mobiles subissent un déplacement tout au long du cycle de fonctionnement du moteur. Les problèmes dus à ces effets sont donc accentués en régime transitoire de la turbomachine où l'on observe des variations significatives de température et de vitesse de rotation du rotor.

Dans un premier cas, lorsque le carter interne se dilate davantage que le rotor, cela conduit à une augmentation des jeux radiaux. A l'inverse, dans un second cas, lorsque le carter interne se contracte davantage que le rotor, cela entraîne une détérioration irréversible des sommets d'aubes par usure et/ou de la surface de la virole et une augmentation aggravée des jeux radiaux lors du retour au premier cas. Ces inconvénients sont nuisibles aux performances et à l'opérabilité de la turbomachine.

Une partie importante du débit d'air qui circule au travers du compresseur est prélevée, via des cavités de prélèvement adjacentes au carter interne, pour divers besoins tels que le dégivrage ou le refroidissement de certains composants de la turbomachine ou de l'aéronef. Ces prélèvements importants d'air forcent le carter interne à répondre rapidement d'un point de vue thermique et provoquent son déplacement radial de manière rapide par rapport au rotor. Le rotor présentant une évolution de déplacement lente par rapport au carter en vis-à-vis, il est donc nécessaire de ralentir le déplacement du carter interne afin de réduire les jeux en régime transitoire.

Des dispositifs d'amélioration des jeux radiaux d'une turbomachine sont connus de l'art antérieur, notamment dans les documents US 5 330 321, US 6 035 929 et GB 2 388 407. Cependant, tous ces dispositifs sont actifs, ce qui implique que pour leur fonctionnement, il est nécessaire de prélever une partie du débit d'air entrant dans la turbomachine. Or, ce prélèvement additionnel nuit au rendement de la turbomachine puisqu'il se déduit de l'air en sortie du compresseur destiné au travail de la turbine. Par ailleurs, ces dispositifs nécessitent des aménagements particuliers de la turbomachine par ajout de pièces volumineuses et/ou par ajout de pièces complexes à réaliser industriellement.

Un autre dispositif d'amélioration des jeux radiaux d'une turbomachine est connu du document US 5 127 794. Il concerne un bouclier thermique visant à isoler le carter externe d'un flux d'air externe pour éviter la déformation concentrique du carter interne en raison de la rigidité des liaisons entre le carter externe et le carter interne. Ce dispositif n'est cependant pas satisfaisant car il nécessite une reconception de la turbomachine et ne peut pas être adapté sur des modèles de moteur existants. Par ailleurs, le bouclier thermique décrit dans ce document, recouvrant une pluralité d'étages et situé à l'extérieur du carter externe, ne peut pas avoir d'action locale, autrement dit à proximité directe des jeux, ce qui réduit son efficacité.

La présente invention a pour objectif de remédier aux inconvénients décrits ci-dessus en proposant un carter interne de turbomachine, comportant une pluralité de viroles annulaires munies de brides reliant deux viroles adjacentes entre elles, caractérisé en ce qu'il comporte en outre :
- au moins un bouclier thermique circonférentiel recouvrant les brides en contact de deux viroles adjacentes, et
- une cavité remplie d'un premier isolant thermique située entre une surface interne concave du bouclier thermique et les brides.

Le bouclier thermique comporte avantageusement une pluralité de moyens d'étanchéité pour une meilleure efficacité. En effet, ledit bouclier thermique comporte sur sa surface interne concave, d'une part, au moins une nervure d'étanchéité circonférentielle en saillie dirigée vers la bride en vis-à-vis et venant en contact avec ladite bride et/ou, d'autre part, au moins une nervure d'étanchéité transversale épousant la forme des brides en vis-à-vis.

Le bouclier thermique selon l'invention est constitué par une pluralité de secteurs reliés bout à bout.

La section transversale du bouclier thermique peut prendre une diversité de formes. Il importe que la surface interne du bouclier thermique soit concave afin qu'il puisse recouvrir les brides en contact de deux viroles adjacentes de sorte qu'un premier isolant thermique soit situé entre la surface interne concave du bouclier thermique et les brides.

Etant donné la forme générale des brides en contact de deux viroles adjacentes, le bouclier thermique comporte idéalement une section transversale présentant la forme d'un U.

Avantageusement, le bouclier thermique permet de réduire localement les effets indésirables dus à la dilatation trop rapide du carter interne par rapport aux aubes de disque rotor en harmonisant les temps de réponse et les amplitudes de déplacement du carter et du rotor.

Par ailleurs, cet avantage est obtenu sans modifications structurelles importantes de la turbomachine, le bouclier thermique selon l'invention pouvant même être rapporté sur des modèles de turbomachines existants.

Un autre intérêt de l'invention réside dans la simplicité de sa mise en place sur une turbomachine, notamment grâce à la constitution du bouclier thermique par une pluralité de secteurs.

L'invention se rapporte également à une turbomachine équipée d'un carter interne comportant au moins un tel bouclier thermique.

L'invention sera bien comprise et ses avantages apparaîtront mieux à la lecture de la description détaillée qui suit.

La description se réfère aux dessins annexés qui représentent respectivement :
- Figure 1, une vue en coupe de l'aval du compresseur haute pression d'une turbomachine ;
- Figure 2, une vue en perspective et en coupe de deux viroles adjacentes d'un carter interne comportant un bouclier thermique selon un premier mode de réalisation de l'invention ;
- Figure 3, une vue en perspective d'un des secteurs constituant le bouclier thermique selon l'invention ;
- Figure 4, une vue partielle en perspective de la zone de recouvrement de deux secteurs adjacents constituant le bouclier thermique selon l'invention;
- Figure 5, une vue en section du premier mode de réalisation du bouclier thermique selon l'invention ;
- Figure 6, une vue en section d'un second mode de réalisation du bouclier thermique selon l'invention ; et
- Figure 7, une vue en section d'un troisième mode de réalisation du bouclier thermique selon l'invention.

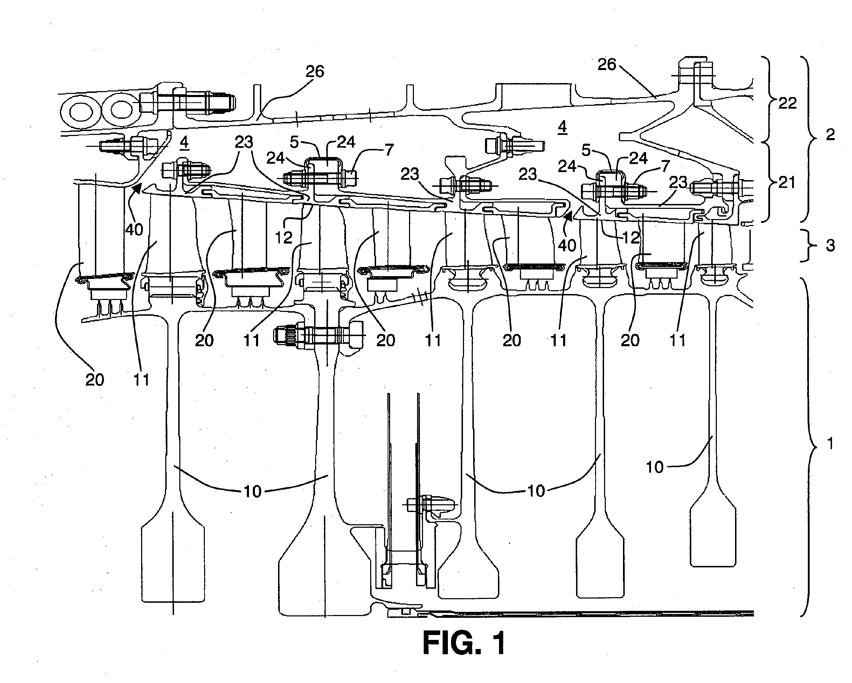

La figure 1 illustre un ensemble rotatif ou rotor 1 d'une turbomachine comportant une pluralité de disques rotors 10. Chaque disque rotor 10 correspond à un étage de compresseur et est muni d'une pluralité d'aubes 11 disposées radialement en périphérie extérieure de chaque disque 10.

Des aubes fixes, appelés redresseurs 20, sont intercalées entre chaque aube mobile 11 de compresseur et constituent un stator qui est solidaire d'un carter 2 fixe également. Le carter 2 comporte un carter interne 21 et un carter externe 22. Le carter interne 21 est constitué d'une pluralité de viroles annulaires 23 adjacentes axialement et reliées les unes aux autres. Chaque disque rotor 10 muni d'aubes 11 est rotatif par rapport à une virole 23 qui entoure circonférentiellement chacun des disques. L'ensemble des viroles 23 adjacentes disposées en vis-à-vis des aubes constitue le carter interne 21 de la turbomachine.

Le carter externe 22 est constituée par un autre ensemble de viroles annulaires 26 de diamètre essentiellement plus important que les viroles annulaires 23 de la partie interne 21 du carter 2 sur un même plan orthogonal à l'axe de rotation de la turbomachine, de sorte qu'une pluralité de cavités de prélèvement 4 sont définies entre le carter interne 21 et le carter externe 22.

Les jeux radiaux 12 se situent entre chaque sommet d'aube 11 de chaque disque rotor 10 et une virole 23 en vis-à-vis constituant la peau du carter interne 21, la peau du carter interne reconstituant une partie de la veine aérodynamique 3.

Une partie importante du débit d'air qui circule au travers du compresseur est prélevée pour divers besoins. L'air de prélèvement en provenance du compresseur débouche dans les cavités de prélèvement 4 par des ouvertures 40 dans la partie interne 21 du carter. Ces prélèvements d'air importants forcent le carter interne 21 à répondre rapidement d'un point de vue thermique et provoquent son déplacement radial de manière rapide par rapport au rotor 1. Le rotor 1 présentant une évolution de déplacement lente par rapport au carter en vis-à-vis, il est nécessaire de ralentir le déplacement du carter interne 21 afin de réduire les jeux 12 en régime transitoire.

On constate, sur la figure 1, que les jeux 12 se situent à proximité directe de l'intersection de deux viroles 23 adjacentes. Les viroles 23 sont fixées les unes aux autres au moyen de leurs brides 24 s'étendant essentiellement de manière radiale vers l'extérieur par rapport à l'axe de rotation de la turbomachine, c'est-à-dire vers les cavités de prélèvement 4 adjacentes. Par ailleurs, la zone d'intersection de deux viroles 23 adjacentes est d'autant plus sensible à son environnement thermique que les pièces qui la constituent sont peu massives. Le bouclier thermique 5 est efficace dans les zones où les problèmes liés aux jeux radiaux 12 se posent.

Bien évidemment, l'exemple, illustré par la figure 1 portant sur un compresseur haute pression d'une turbomachine, n'est pas limitatif. En effet, toute partie de la turbomachine où se pose des problèmes identiques peut mettre en oeuvre l'invention.

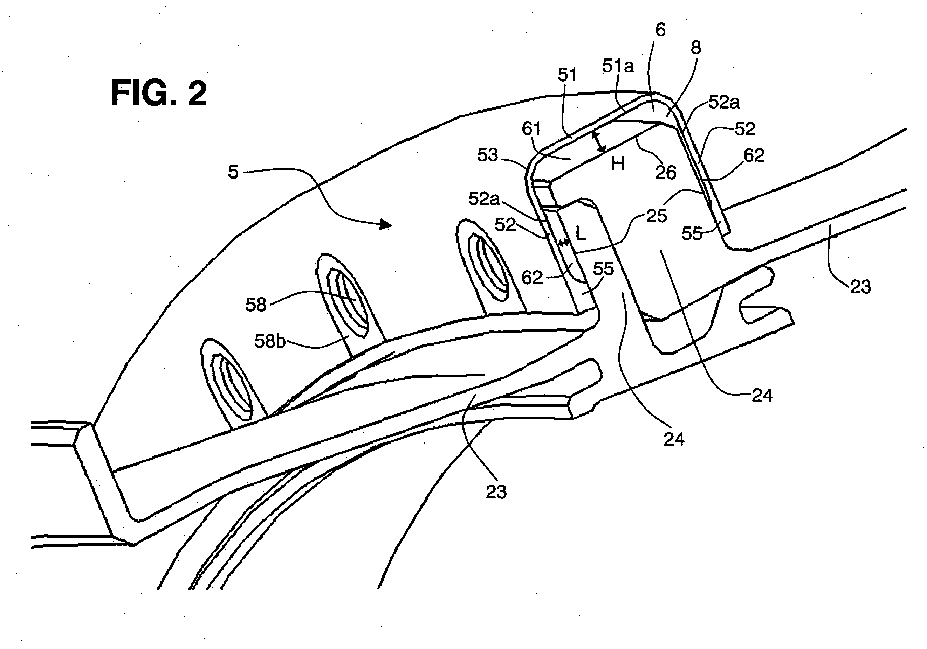

La figure 2 illustre l'action du bouclier thermique 5 selon l'invention. Le bouclier thermique 5, se présente sous la forme d'un profilé circonférentiel et recouvre les brides 24 en contact de deux viroles 23 adjacentes axialement. Le bouclier thermique 5 comporte une surface interne concave 51 a, 52a et une surface externe convexe 53. Par ailleurs, une cavité 6 remplie d'un premier isolant thermique 8 est située entre la surface interne concave 51 a, 52a du bouclier thermique 5 et les brides 24.

On entend par profilé, au sens de la présente invention, une pièce de forme sensiblement allongée ayant une section transversale, à profil particulier, sensiblement constante sur toute sa longueur.

Compte tenu de la forme générale des brides 24 en contact de deux viroles 23 adjacentes, la forme idéale de la section transversale du bouclier thermique 5 se présente sous la forme d'un U. La caractéristique recherchée étant que le bouclier thermique 5 recouvre les brides 24 en contact de deux viroles 23 adjacentes et qu'une cavité 6 soit disposée entre la surface interne concave 51 a, 52a du bouclier thermique 5 et les brides 24. L'homme du métier peut imaginer une multitude de formes pour parvenir à un résultat identique. Par exemple, il est envisageable de concevoir une section transversale en forme de « fer à cheval », d'anneau ou d'ovale ouvert.

Lorsque le profilé se présente notamment sous la forme d'un U, la cavité 6 est constituée, d'une part, par des poches 62 entre les branches 52 du U et les brides 24 en vis-à-vis, et/ou d'autre part, par un logement circonférentiel 61 entre la base 51 du U et les brides 24 en vis-à-vis. Les brides 24 sont donc entièrement isolées des cavités de prélèvement 4.

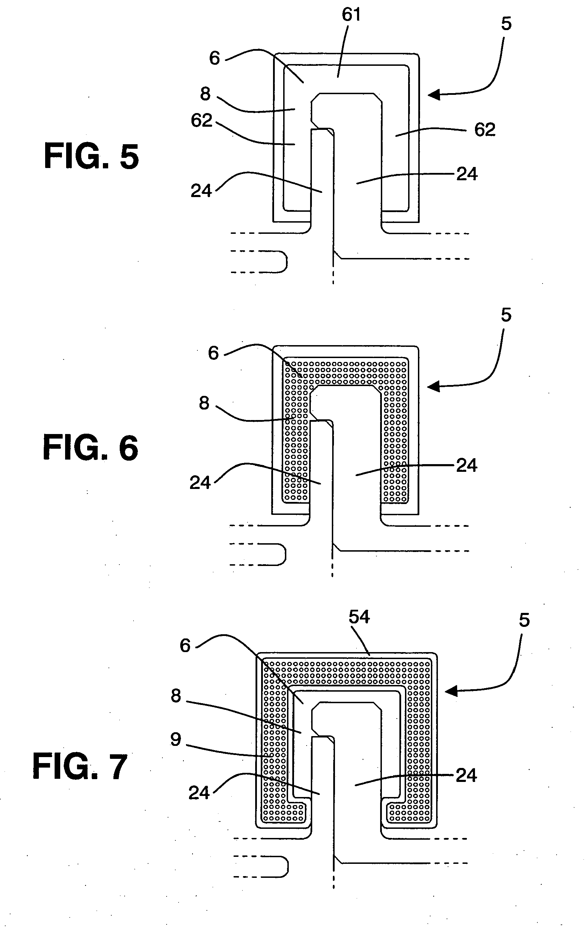

Selon un premier mode de réalisation, tel que représenté sur les figures 2 et 5, le premier isolant thermique 8 remplissant la cavité 6 peut être de l'air inerte. Les surfaces radiales 25 et la surface circonférentielle 26 des brides 24 sont ainsi essentiellement en contact avec de l'air inerte des poches 62 et/ou du logement circonférentiel 61. Les brides 24 sont ainsi essentiellement soumises à des échanges convectifs naturels au lieu d'échanges convectifs forcés. Sans ce bouclier thermique 5, les brides 24 baigneraient directement dans la cavité de prélèvement 4. Pour obtenir une meilleure efficacité du bouclier thermique 5, l'air doit être inerte autant que possible, autrement dit exempt de mouvement par rapport aux parties fixes.

Selon un second mode de réalisation, tel que représenté à la figure 6, le premier isolant thermique 8 remplissant la cavité 6 peut également être de la fibre de verre ou du feutre de laine de silice ou tout autre matériau connu pour son pouvoir isolant thermique.

Selon un troisième mode de réalisation, tel que représenté à la figure 7, le bouclier thermique 5 peut être constitué par une enveloppe 54 remplie d'un second isolant thermique 9 qui peut être de la fibre de verre ou du feutre de laine de silice ou tout autre matériau connu pour son pouvoir isolant thermique. L'enveloppe 54 peut être constituée d'une feuille métallique souple. La forme extérieure de ce bouclier thermique 5 est alors sensiblement identique aux boucliers thermiques 5 des deux autres modes de réalisation présentés plus-haut, un premier isolant thermique 8 remplissant la cavité 6. De préférence, ce premier isolant thermique 8 est de l'air inerte.

La surface circonférentielle interne concave 51 a définie par la base 51 du U du bouclier thermique 5 selon l'invention doit avoir un rayon intérieur minimum, par rapport à l'axe de rotation de la turbomachine, supérieur au rayon maximum de la surface circonférentielle 26 des brides 24 de manière à obtenir une cavité circonférentielle continue qui isole les brides 24 de la cavité de prélèvement 4. Selon les besoins et les possibilités, la distance entre ces rayons précités, définissant une hauteur H, peut varier. Plus cette hauteur H est importante, plus le bouclier thermique 5 selon l'invention sera efficace.

De même, plus la largeur L des poches 62, définie par la distance entre la surface interne concave 52a des branches 52 du U et les surfaces radiales 25 des brides 24 en vis-à-vis desdites branches 52 du U, est importante plus le bouclier thermique 5 selon l'invention sera efficace. De même encore, selon les besoins et les possibilités, la largeur L peut varier.

Afin d'empêcher l'air de la cavité de prélèvement 4 de pénétrer jusqu'aux poches 62 par l'extrémité des branches 52 du U au niveau de l'épaulement des brides 24, le bouclier thermique 5 comporte sur sa surface interne concave, sur au moins une extrémité d'une branche 52 du U, une nervure d'étanchéité circonférentielle 55, ladite nervure 55 étant en saillie dirigée vers la bride 24 en vis-à-vis et en contact avec cette dernière.

De même, afin d'empêcher l'air de la cavité de prélèvement 4 de pénétrer jusqu'au logement circonférentiel 61, le bouclier thermique 5 comporte sur la surface interne concave 51 a, 52a du U une nervure d'étanchéité transversale 59 épousant la forme des brides 24 en vis-à-vis.

Une caractéristique particulièrement intéressante du bouclier thermique 5 réside dans le fait qu'il est constitué par une pluralité de secteurs 50, les secteurs 50 étant assemblés bout à bout. De préférence, les secteurs 50 sont identiques ce qui simplifie la fabrication du bouclier thermique 5.

Par exemple, si le bouclier thermique 5 est constitué de secteurs angulaires de 45°, pour recouvrir l'ensemble des brides 24 localisées sur toute la virole, 8 secteurs 50 sont nécessaires. Bien entendu, cet exemple n'est pas limitatif et peut être décliné en une multitude de variantes.

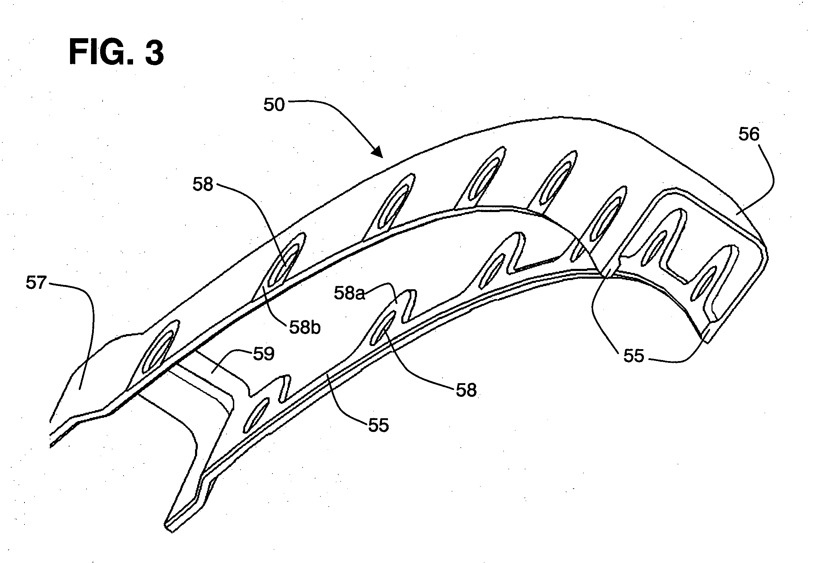

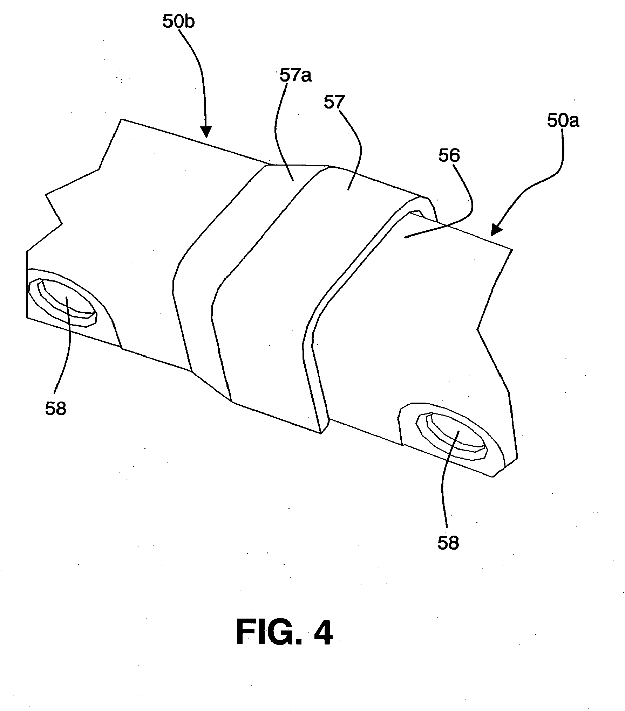

Chaque secteur 50 comporte une première extrémité 56 et une seconde extrémité 57. La section transversale du profilé est essentiellement constante sur toute la longueur du secteur 50, y compris la première extrémité 56. Seule la section transversale de la seconde extrémité 57 se distingue du reste du secteur 50 sur une longueur relativement faible par rapport à la longueur totale dudit secteur 50. Cette longueur représente environ 5% de la longueur totale dudit secteur 50 dans l'exemple illustré par la figure 3. En effet, la seconde extrémité 57 présente une section transversale de dimension supérieure à la section transversale de la première extrémité 56, la seconde extrémité 57 d'un second secteur 50b recouvrant la première extrémité 56 d'un premier secteur 50a adjacent au second secteur 50b, comme illustré par la figure 4.

En raison du flux d'air comprimé dû à la rotation des aubes 11 du rotor, l'écoulement de l'air de prélèvement possède généralement une composante tangentielle circulant circonférentiellement dans les cavités de prélèvement 4. Dans la zone de recouvrement de deux secteurs adjacents 50a et 50b, illustrée par la figure 4, la surface interne concave du second secteur 50b épouse la surface externe convexe du premier secteur 50a de manière à limiter les fuites entre chaque secteur 50. Cette caractéristique de l'invention évite ainsi la dégradation de l'efficacité du bouclier thermique 5 par l'écoulement circonférentiel de l'air de prélèvement, l'isolant thermique 8 devant rester le plus isolé possible. Dans la zone de recouvrement, les extrémités de deux secteurs adjacents 50a et 50b sont raccordées l'une à l'autre par une faible portion à section variable 57a du secteur 50b.

Toujours dans le but de renforcer l'efficacité de l'invention, le recouvrement des premières extrémités 56 par les secondes extrémités 57 doit, de préférence, tenir compte du sens de circulation circonférentielle de l'air de prélèvement. Notamment, les secteurs 50 doivent être disposés autour des brides 24, la première extrémité 56 de chaque secteur 50 étant située en aval de l'écoulement d'air circonférentiel et la seconde extrémité 57 de chaque secteur 50 étant située en amont de celui-ci, de sorte que l'air de prélèvement s'écoule de la première extrémité 56 à la seconde extrémité 57 d'un même secteur 50, ce qui évite que ce bouclier thermique 5 devienne une écope pour l'air de prélèvement.

La fixation de chaque secteur 50 sur les brides 24 s'effectue au moyen de boulons 7. Chaque secteur 50 comporte ainsi une pluralité d'orifices circulaires 58 pour la fixation du secteur 50 sur les brides 24 par des boulons 7. Sur la figure 3, des orifices circulaires 58 sur chaque branche 52 du U sont en vis-à-vis de manière à permettre la fixation de boulons 7 traversant à la fois le bouclier thermique 5 et les brides 24 dans le sens axial, comme illustré sur la figure 1.

Par ailleurs, chaque secteur 50 comporte, sur sa surface interne concave 51 a, 52a, au niveau de chaque orifice circulaire 58, une surface d'appui 58a, en saillie, dirigée vers la surface de la bride 24 en vis-à-vis.

Chaque secteur 50 comporte également sur sa surface externe convexe 53, au niveau de chaque orifice circulaire 58, un lamage 58b pour accueillir une extrémité d'un boulon 7.

## Revendications

1. Carter interne de turbomachine, comportant une pluralité de viroles annulaires (23) munies de brides (24) reliant deux viroles (23) adjacentes entre elles, **caractérisé en ce qu'**il comporte en outre :
• au moins un bouclier thermique (5) circonférentiel recouvrant les brides (24) en contact de deux viroles (23) adjacentes,
• une cavité (6) remplie d'un premier isolant thermique (8) située entre une surface interne concave (51 a, 52a) du bouclier thermique (5) et les brides (24).

2. Carter interne de turbomachine selon la revendication 1 **caractérisé en ce que** le bouclier thermique (5) comporte sur sa surface interne concave (51a, 52a) au moins une nervure d'étanchéité circonférentielle (55) en saillie dirigée vers la bride (24) en vis-à-vis et venant en contact avec ladite bride (24).

3. Carter interne de turbomachine selon l'une quelconque des revendications précédentes **caractérisé en ce que** le bouclier thermique (5) comporte sur sa surface interne concave (51 a, 52a) au moins une nervure d'étanchéité tranversale (59) épousant la forme des brides (24) en vis-à-vis.

4. Carter interne de turbomachine selon l'une quelconque des revendications précédentes **caractérisé en ce que** le bouclier thermique (5) est constituée par une pluralité de secteurs (50) reliés bout à bout.

5. Carter interne de turbomachine selon la revendication 4 **caractérisé en ce que** les secteurs (50) sont identiques.

6. Carter interne de turbomachine selon l'une quelconque des revendications 4 à 5 **caractérisé en ce que** chaque secteur (50) comporte une première extrémité (56) et une seconde extrémité (57), la seconde extrémité (57) présentant une section transversale de dimension supérieure à la section transversale de la première extrémité (56), la seconde extrémité (57) d'un second secteur (50b) recouvrant la première extrémité (56) d'un premier secteur (50a) adjacent au second secteur (50b).

7. Carter interne de turbomachine selon la revendication 6 **caractérisé en ce que**, dans la zone de recouvrement de deux secteurs (50a et 50b) adjacents, la surface interne concave du second secteur (50b) épouse la surface externe convexe du premier secteur (50a).

8. Carter interne de turbomachine selon l'une quelconque des revendications 6 à 7 **caractérisé en ce que** les secteurs (50) sont disposés bout à bout autour des brides (24), la première extrémité (56) de chaque secteur (50) étant située en aval d'un écoulement d'air circonférentiel et la seconde extrémité (57) de chaque secteur (50) étant située en amont, l'écoulement d'air circonférentiel circulant autour du carter interne.

9. Carter interne de turbomachine selon l'une quelconque des revendications 4 à 8 **caractérisé en ce que** chaque secteur (50) comporte une pluralité d'orifices circulaires (58) pour la fixation du secteur (50) sur les brides (24) par des boulons (7).

10. Carter interne de turbomachine selon la revendication 9 **caractérisé en ce que** chaque secteur (50) comporte, sur sa surface interne concave (51 a, 52a) au niveau de chaque orifice circulaire (58), une surface d'appui (58a), en saillie, dirigée vers la surface de la bride (24) en vis-à-vis.

11. Carter interne de turbomachine selon les revendications 9 ou 10 **caractérisé en ce que** chaque secteur (50) comporte sur sa surface externe convexe (53), au niveau de chaque orifice circulaire (58), un lamage (58b) pour accueillir une extrémité d'un boulon (7).

12. Carter interne de turbomachine selon l'une quelconque des revendications précédentes **caractérisé en ce que** le bouclier thermique (5) comporte une section transversale présentant la forme d'un U muni d'une base (51) et de deux branches (52).

13. Carter interne de turbomachine selon la revendication 12 **caractérisé en ce que** la cavité (6) est constituée par des poches (62) entre les branches (52) du U et les brides (24) en vis-à-vis desdites branches (52) du U.

14. Carter interne de turbomachine selon l'une quelconque des revendications 12 ou 13 **caractérisé en ce que** la cavité (6) est constituée par un logement circonférentiel (61) entre la base (51) du U et les brides (24) en vis-à-vis de ladite base (51) du U.

15. Carter interne de turbomachine selon l'une quelconque des revendications 1 à 14 **caractérisé en ce que** le premier isolant thermique (8) est choisi parmi l'air inerte, la fibre de verre et le feutre de laine de silice.

16. Carter interne de turbomachine selon l'une quelconque des revendications précédentes **caractérisé en ce que** le bouclier thermique (5) est constitué par une enveloppe (54) remplie d'un second isolant thermique (9) choisi parmi la fibre de verre et le feutre de laine de silice.

17. Carter interne de turbomachine selon la revendication 16 **caractérisé en ce que** le second isolant thermique (9) est choisi parmi la fibre de verre et le feutre de laine de silice.

18. Carter interne de turbomachine selon l'une quelconque des revendications 16 ou 17 **caractérisé en ce que** l'enveloppe (54) est constituée d'une feuille métallique souple.

19. Turbomachine équipée d'un carter interne selon l'une quelconque des revendications précédentes.
